# EUROPÄISCHE PATENTSCHRIFT

(11) **EP 3 156 459 B1**
(45) Veröffentlichungstag und Bekanntmachung des Hinweises auf die Patenterteilung: **15.08.2018**
(21) Anmeldenummer: 16191644.0
(22) Anmeldetag: 21.02.2012
(51) Int. Cl.: C09C 1/28, C01B 33/18, C01B 33/03

(54) **SILICIUMDIOXIDPULVER MIT GROSSER PORENLÄNGE**
SILICON DIOXIDE POWDER WITH HIGH PORE LENGTH
POUDRE DE DIOXYDE DE SILICIUM AYANT UNE GRANDE LONGUEUR DE PORE

(30) Priorität: 27.04.2011 DE 102011017587
(43) Veröffentlichungstag der Anmeldung: 19.04.2017
(62) Teilanmeldung aus: 12706802.1
(73) Patentinhaber: Evonik Degussa GmbH, 45128 Essen (DE)
(72) Erfinder: Menzel, Frank, 63456 Hanau (DE); Hagemann, Michael, 63796 Kahl (DE); Hille, Andreas, 79541 Lörrach (DE); Maisels, Arkadi, 63452 Hanau (DE)

(56) Entgegenhaltungen:
- EP-A1- 1 908 804
- EP-A1- 1 997 776
- WO-A2-2007/143067
- US-A1- 2005 020 699

## Beschreibung

Die Erfindung betrifft ein Siliciumdioxidpulver. Die Erfindung betrifft weiterhin einen dieses Siliciumdioxidpulver enthaltenden Wärmedämmstoff.

Die Flammenhydrolyse zur Herstellung von Siliciumdioxid ist ein seit langem bekanntes, großtechnisch durchgeführtes Verfahren. Bei diesem Verfahren wird ein verdampftes oder gasförmiges, hydrolysierbares Siliciumhalogenid mit einer Flamme zur Reaktion bringt, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Ein so hergestelltes Siliciumdioxid wird als pyrogenes Siliciumdioxid bezeichnet.

Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten, die aufgrund ihrer dreidimensionalen, offenen Struktur makroporös sind.

Aufgrund dieser Struktur sind pyrogen hergestellte Siliciumdioxidpulver ideale Wärmedämmstoffe, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt. Beim Verpressen von pyrogenem Siliciumdioxid enthaltenden Wärmedämmstoffen wird zudem die Übertragung von Wärme durch Konvektion minimiert.

In EP-A-199776 wird ein pyrogen hergestelltes Siliciumdioxidpulver in Form von aggregierten Primärpartikeln mit einer STSA-Oberfläche von 10 bis 500 m²/g, einer auf die STSA-Oberfläche bezogenen Verdickungswirkung von 4 bis 8 mPas·g/m² und einem Mikroporenvolumen von 0,03 bis 0,07 cm³/g offenbart. Es wird hergestellt, indem man eine hydrolysierbare Siliciumverbindung, Luft und Wasserstoff im stöchiometrischen Überschuss verbrennt.

In US2005/020699 wird ein Siliciumdioxidsol mit einer BET-Oberfläche von 250 m²/g oder mehr und einem durchschnittlichen Teilchendurchmesser von 10 nm bis 400 nm offenbart, welches Mesoporen mit einem einheitlichen Durchmesser aufweist, und welches im Wesentlichen nicht aggregiert vorliegt.

Die technische Aufgabe der vorliegenden Erfindung war es ein Siliciumdioxidpulver bereitzustellen, welches aufgrund seiner Struktur verbesserte Wärmedämmeigenschaften erwarten lässt.

Gegenstand der Erfindung ist ein Siliciumdioxidpulver in Form aggregierter Primärpartikel, welches eine spezifische Porenlänge L von 2,5 x 10⁵ bis 4 x 10⁵ m/µg, bevorzugt 2,8 bis 3,5 x 10⁵ m/µg, aufweist, wobei L definiert ist als der Quotient aus dem Quadrat der BET-Oberfläche und dem mittels der BJH-Methode bestimmten, kumulierten Porenvolumen von 2 bis 50 nm, gemäß der Formel L = (BET x BET) / BJH-Volumen, wobei die BET-Oberfläche 400 bis 600 m²/g und das mittels der BJH-Methode bestimmte kumulierte Volumen der Poren von 2 bis 50 nm 0,7 bis 0,9 cm³/g ist.

Die Primärpartikel sind weitestgehend sphärisch, ihre Oberfläche glatt und sie weisen nur eine geringe Anzahl von Mikroporen auf. Sie sind über Sinterhälse fest zu Aggregaten verwachsen. Die Aggregate bilden dreidimensionale, offene, die Mikroporosität bestimmende Strukturen.

Das erfindungsgemäße Pulver kann bedingt durch die Einsatzstoffe oder das Herstellverfahren geringe Anteile an Verunreinigungen aufweisen. In der Regel ist der Gehalt an SiO₂ wenigstens 99 Gew.-%, bevorzugt wenigstens 99,5 Gew.-%.

In einer besonderen Ausführungsform beträgt die BET-Oberfläche 450 bis 550 m²/g.

Weiterhin kann es vorteilhaft sein, wenn das mittels der BJH-Methode bestimmte kumulierte Volumen der Poren von 2 bis 50 nm des Siliciumdioxidpulvers einen Wert von 0,80 bis 0,85 cm³/g, aufweist.

In einer weiteren Ausführungsform der Erfindung weist das Siliciumdioxidpulver ein mittels t-plot bestimmtes Mikroporenvolumen von 0,030 bis 0,1 cm³/g, bevorzugt 0,035 bis 0,070 cm³/g, auf.

Die mittlere Porenweite des Siliciumdioxidpulvers beträgt bevorzugt 6 bis 9 nm. Der Medianwert der Anzahlverteilung der Primärpartikeldurchmesser D₅₀ beträgt bevorzugt 4 bis 6 nm und die 90% Spanne der Anzahlverteilung der Primärpartikeldurchmesser 1,5 bis 15 nm.

Das erfindungsgemäße Siliciumdioxidpulver kann erhalten werden, indem man ein Gasgemisch enthaltend eine oxidierbare und/oder hydrolysierbare Siliciumverbindung, Wasserstoff und ein Sauerstoff enthaltendes Gas 1, bevorzugt Luft 1, in einem Brenner zündet und die Flamme in eine Reaktionskammer hinein verbrennt, in die Reaktionskammer zusätzlich Sauerstoff enthaltendes Gas 2, bevorzugt Luft 2, gibt, anschließend den erhaltenen Feststoff gegebenenfalls mit Wasserdampf behandelt, von gasförmigen Stoffen abtrennt, wobei gilt, dass
a) im Brenner
   der Quotient I aus zugeführter Menge an Sauerstoff und stöchiometrisch benötigter Sauerstoffmenge 2,20 bis 3,00 und
   der Quotient II aus zugeführter Menge an Wasserstoff und stöchiometrisch benötigter Wasserstoffmenge 1,00 bis 1,30 und
   die Ausströmgeschwindigkeit v des Gasgemisches aus dem Brenner 10 bis 100 ms⁻¹, bevorzugt 30 bis 60 ms⁻¹ ist
b) im Reaktionsraum,
   der Quotient III aus insgesamt zugeführter Menge an Sauerstoff und stöchiometrisch benötigter Sauerstoffmenge 2,50 bis 3,80 und der Quotient III/ Quotient I 1,1 bis 1,5 ist.

Es ist essentiell, dass die durch die Quotienten definierten Einsatzstoffmengen und deren Verhältnis, zusammen mit einer hohen Ausströmgeschwindigkeit, eingehalten werden um das erfindungsgemäße Siliciumdioxidpulver zu erhalten.

Die stöchiometrisch benötigte Sauerstoffmenge ist definiert als die Sauerstoffmenge, die erforderlich ist um mindestens die Siliciumverbindungen in Siliciumdioxid zu überführen und eventuell noch vorhandenen Wasserstoff umzusetzen.

Die stöchiometrisch benötigte Wasserstoffmenge ist definiert als die Wasserstoffmenge, die erforderlich ist um mindestens das in den Siliciumverbindungen enthaltene Chlor zu Chlorwasserstoff umzusetzen.

Als Siliciumverbindung kann bevorzugt wenigstens eine aus der Gruppe bestehend aus SiCl₄, CH₃SiCl₃, (CH₃)₂SiCl₂, (CH₃)₃SiCl, HSiCl₃, H₂SiCl₂ H₃SiCl(CH₃)₂HSiCl, CH₃C₂H₅SiCl₂, (n-C₃H₇)SiCl₃ und (H₃C)ₓCl₃₋ₓSiSi(CH₃)_{y}Cl_{3-y} mit R=CH₃ und x+y = 2 bis 6 eingesetzt werden. Besonders bevorzugt kann SiCl₄ oder ein Gemisch aus SiCl₄ und CH₃SiCl₃ eingesetzt werden.

Nach der Abtrennung von gasförmigen Stoffen kann das Siliciumdioxidpulver mit Wasserdampf behandelt werden. Diese Behandlung dient in erster Linie dazu, die bei Einsatz chlorhaltiger Einsatzstoffe eventuell an der Oberfläche der Partikel anhaftenden chloridhaltige Gruppen zu entfernen. Gleichzeitig reduziert diese Behandlung die Anzahl von Agglomeraten. Das Verfahren kann kontinuierlich ausgeführt werden, indem das Pulver mit Wasserdampf, gegebenenfalls zusammen mit Luft, im Gleich- oder Gegenstrom behandelt wird. Die Temperatur bei der die Behandlung mit Wasserdampf erfolgt, beträgt zwischen 250 und 750°C, wobei Werte von 450 bis 550°C bevorzugt sind.

Ein weiterer Gegenstand der Erfindung ist ein Wärmedämmstoff, welcher das erfindungsgemäße Siliciumdioxidpulver enthält. Weiterhin kann der Wärmedämmstoff Trübungsmittel und/oder Bindemittel enthalten.

### Beispiele

### Analytische Bestimmungen

Die BET-Oberfläche wird nach DIN ISO 9277 bestimmt. BJH-Verfahren und t-plot-Verfahren sind in DIN 66134 und DIN 66135 beschrieben. Dabei wird beim t-plot-Verfahren die Schichtdickengleichung
t = (26,6818/(0,0124806-log(p/p₀)))^{0,4}, mit p = Gasdruck und
po = Sättigungsdampfdruck des Adsorptivs bei der Messtemperatur, beide mit der Einheit Pa, verwendet.

Die Primärpartikeldurchmesser werden mit einem Teilchengrößenanalysator TGZ 3 der Fa. Zeiss durch Analyse von TEM-Bildern bestimmt, die mit einem Gerät der Fa. Hitachi (H 7500) und einer CCD-Kamera der Fa. SIS (MegaView II) aufgenommen werden. Die Bildvergrößerung zur Auswertung beträgt 30000:1 bei einer Pixeldichte von 3,2 nm. Die Anzahl der ausgewerteten Partikel beträgt ca. 10000. Die Präparation erfolgt gemäß ASTM 3849-89.

Beispiel 1: 112 kg/h Siliciumtetrachlorid werden verdampft und mittels Stickstoff in die Mischkammer eines Brenners überführt. Gleichzeitig werden 35 Nm³/h Wasserstoff und 190 Nm³/h Luft 1 in die Mischkammer gegeben. Das Gemisch wird gezündet und in einer Flamme in eine Reaktionskammer hinein verbrannt. Die Austrittsgeschwindigkeit aus dem Brenner beträgt 53,0 ms⁻¹. Zusätzlich werden 50 Nm³/h Luft 2, in die Reaktionskammer eingebracht. Die Reaktionsgase und das entstandene Siliciumdioxid werden durch Anlegen eines Unterdruckes durch ein Kühlsystem gesaugt und dabei auf Werte zwischen 100 und 160°C abgekühlt. In einem Filter oder Zyklon wird der Feststoff vom Abgasstrom abgetrennt und nachfolgend bei einer Temperatur von 560°C mit Wasserdampf behandelt.

Beispiel 2 wird analog Beispiel 1 durchgeführt, jedoch werden 30,7 Nm³/h Wasserstoff und 168 Nm³/h Luft 1 in die Mischkammer gegeben. Die Austrittsgeschwindigkeit aus dem Brenner beträgt 47,2 ms⁻¹.

Beispiel 3 (Vergleichsbeispiel) wird analog Beispiel 1 durchgeführt, jedoch werden 26 Nm³/h Wasserstoff und 170 Nm³/h Luft in die Mischkammer gegeben. Die Austrittsgeschwindigkeit aus dem Brenner beträgt 46,6 ms⁻¹.

In Tabelle 1 sind die die Einsatzstoffe und daraus errechnete Größen wiedergegeben. Die physikalisch-chemischen Werte der erhaltenen Siliciumdioxidpulver sind in Tabelle 2 wiedergegeben. Als zusätzliche Beispiele dienen die kommerziell erhältlichen Siliciumdioxidpulver AEROSIL® 300 (C1) und AEROSIL® 380 (C2), beide Evonik Degussa; Cab-O-Sil® EH5 (C3), Cabot; REOLOSIL QS 30 (C4), Tokuyama und HDK® 40 (C5), Wacker.

Die Berechnung der Quotienten I-III soll für Beispiel 1 gezeigt werden. Die zugrunde liegende Reaktionsgleichung lautet:

SiCl₄ + 2H₂ + O₂ -> SiO₂ + 4HCl.

Pro Mol SiCl₄ werden also 2 Mole Wasserstoff und 1 Mol Sauerstoff benötigt.

112,0 kg (0,659 kmol) SiCl₄ werden mit 35 Nm³ Wasserstoff und 190 Nm³ Luft, entsprechend 39,9 Nm³ Sauerstoff, verbrannt.

Entsprechend ist der stöchiometrisch benötigte Wasserstoffbedarf 2 x 0,659 kmol = 1,318 kmol = 29,54 Nm³ Wasserstoff. Damit ergibt sich Quotient II zu 35/29,54 = 1,18.

Der stöchiometrische Sauerstoffbedarf setzt sich aus
Anteil (a), der benötigt wird, um das Siliciumdioxid zu bilden, und
Anteil (b), der benötigt wird, um überschüssigen Wasserstoff in Wasser zu überführen, zusammen. Er berechnet sich für obiges Beispiel folgendermaßen:
   Anteil a): Bildung von SiO₂ = 0,659 kmol = 14,77 Nm³ O₂
   Anteil b): H₂O aus der nicht mit SiCl₄ umgesetzten Menge an Wasserstoff:
      35 Nm³ H₂ - 29,54 Nm³ H₂ = 5,46 Nm³ H₂ nicht umgesetzt

Gemäß H₂ + 0,5 O₂ -> H₂O ist eine Menge von 5,46/2 = 2,23 Nm³ O₂ erforderlich. Stöchiometrischer Sauerstoffbedarf = Anteile (a + b) = (14,77 + 2,23) Nm³ O₂ = 17 Nm³ O₂. Damit ergibt sich Quotient I zu (190 * 0,21) Nm³ O_{2 eingesetzt} / 17 Nm³ O_{2 benötigt} zu 2,70.

Bei dem Verfahren wird zusätzlich Luft in die Reaktionskammer eingebracht. Hierdurch ändert sich der stöchiometrische Sauerstoffbedarf nicht. Der Quotient III berechnet sich aus der insgesamt eingebrachten Sauerstoffmenge, Brenner plus Reaktionsraum, aus (190 + 50) * 0,21 Nm³ O_{2 eingesetzt} / 17 Nm³ O_{2 benötigt} zu 3,41 und der Quotient III/I zu 1,26.

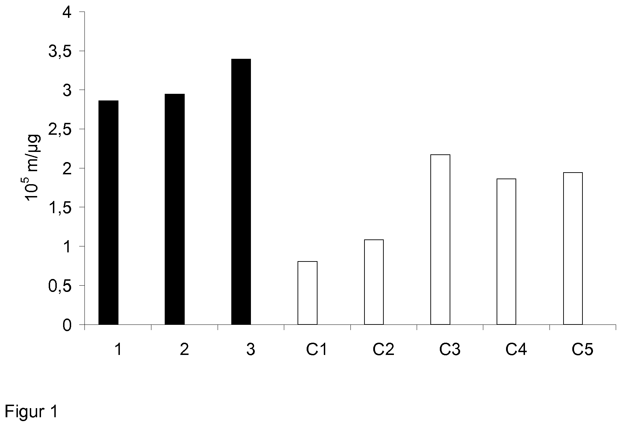

Figur 1 zeigt die Porenlänge der erfindungsgemäßen Siliciumdioxidpulver 1 und 2 und der zusätzlichen Beispiele 3 und C1 bis C5. Es ist die deutlich größere Porenlänge der erfindungsgemäßen Siliciumdioxidpulver zu erkennen.

**Tabelle 1: Einsatzstoffe und Einsatzbedingungen**

| **Beispiel** | | **1** | **2** | **3** |
|---|---|---|---|---|
| SiCl₄ | kg/h | 112,0 | 112,0 | 112,0 |
| H2 | Nm³/h | 35,0 | 30,7 | 26,0 |
| Luft 1 | Nm³/h | 190,0 | 168,0 | 170,0 |
| Luft 2 | Nm³/h | 50,0 | 50,0 | 50,0 |
| v | ms⁻¹ | 53,0 | 47,2 | 46,6 |

| Quotient | | | | |
|---|---|---|---|---|
| I | | 2,70 | 2,39 | 2,42 |
| II | | 1,18 | 1,04 | 0,88 |
| III | | 3,41 | 3,10 | 3,13 |
| III/I | | 1,26 | 1,30 | 1,29 |

**Tabelle 2: Physikalisch-chemische Eigenschaften**

| **Beispiel** | | **1** | **2** | **3** | **C1** | **C2** | **C3** | **C4** | **C5** |
|---|---|---|---|---|---|---|---|---|---|
| BET-Oberfläche | m²/g | 482 | 496 | 419 | 286 | 381 | 386 | 368 | 364 |

| BJH Desorption* | | | | | | | | | |
|---|---|---|---|---|---|---|---|---|---|
| Porenvolumen kumuliert | cm³/g | 0,81 | 0,84 | 0,52 | 1,02 | 1,34 | 0,69 | 0,73 | 0,68 |
| Porenoberfläche kumuliert | m²/g | 356 | 370 | 234 | 272 | 354 | 314 | 294 | 285 |
| mittlere Porenweite | nm | 7,1 | 7,1 | 5,7 | 14,3 | 14,2 | 7,3 | 8,2 | 7,8 |
| mittlerer Porendurchmesser | nm | 9,1 | 9,0 | 8,87 | 14,9 | 15,1 | 8,7 | 9,9 | 9,5 |
| (BET x BET)/kumuliertes Porenvolumen gemäß BJH | 10⁵ m/µg | 2,86 | 2,94 | 3,39 | 0,80 | 1,08 | 2,17 | 1,86 | 1,94 |

| t-plot | | | | | | | | | |
|---|---|---|---|---|---|---|---|---|---|
| Mikroporenvolumen | cm³/g | 0,035 | 0,034 | 0,066 | 0,013 | 0,025 | 0,016 | 0,009 | 0,013 |
| Mikroporenfläche | m²/g | 82 | 81 | 149 | 36 | 63 | 44 | 31 | 38 |
| Externe Oberfläche | m²/g | 400 | 415 | 270 | 250 | 318 | 342 | 338 | 326 |

| Primärpartikeldurchmesser^{&} | | | | | | | | | |
|---|---|---|---|---|---|---|---|---|---|
| Medianwert | nm | 4,4 | 4,9 | 6,3 | n.b. | | | | |
| 90%-Spanne | nm | 2,91-8,83 | 2,70-9,50 | 3,85-10,60 | n.b. | | | | |

| | | | | | | | | | |
|---|---|---|---|---|---|---|---|---|---|
| * 2-50 nm; & Anzahlverteilung; n.b. = nicht bestimmt | | | | | | | | | |

## Patentansprüche

1. Siliciumdioxidpulver in Form aggregierter Primärpartikel, **dadurch gekennzeichnet, dass** es eine spezifische Porenlänge L von 2,5 x 10⁵ bis 4 x 10⁵ m/µg aufweist, wobei L definiert ist als der Quotient aus dem Quadrat der BET-Oberfläche und dem mittels der BJH-Methode bestimmten, kumulierten Porenvolumen von 2 bis 50 nm, gemäß der Formel L = (BET x BET)/BJH-Volumen, wobei die BET-Oberfläche 400 bis 600 m²/g und das mittels der BJH-Methode bestimmte kumulierte Volumen der Poren von 2 bis 50 nm 0,7 bis 0,9 cm³/g ist..

2. Siliciumdioxidpulver nach Anspruch 1, **dadurch gekennzeichnet, dass** das mittels t-plot bestimmte Mikroporenvolumen 0,030 bis 0,10 cm³/g ist.

3. Wärmedämmstoff enthaltend das Siliciumdioxidpulver gemäß der Ansprüche 1 oder 2.

## Claims

1. Silicon dioxide powder in the form of aggregated primary particles, **characterized in that** it has a specific pore length L of 2.5 x 10⁵ to 4 x 10⁵ m/µg, where L is defined as the quotient formed from the square of the BET surface area and the cumulative 2-50 nm pore volume determined using the BJH method, as per the formula L = (BET x BET)/BJH volume, wherein the BET surface area is in the range from 400 to 600 m²/g and the cumulative 2-50 nm pore volume determined using the BJH method is in the range from 0.7 to 0.9 cm³/g.

2. Silicon dioxide powder according to Claim 1, **characterized in that** the t-plot micropore volume is in the range from 0.030 to 0.10 cm³/g.

3. Thermal insulant comprising the silicon dioxide powder according to Claim 1 or 2.

## Revendications

1. Poudre de dioxyde de silicium sous forme de particules primaires agglomérées, **caractérisée en ce qu'**elle présente une longueur spécifique de pore L de 2,5 x 10⁵ à 4 x 10⁵ m/µg, L étant défini comme le quotient du carré de la surface BET et du volume cumulé des pores de 2 à 50 nm, déterminé selon le procédé BJH, selon la formule L = (BET x BET)/volume BJH, la surface BET étant de 400 à 600 m²/g et le volume cumulé des pores de 2 à 50 nm, déterminé au moyen du procédé BJH, étant de 0,7 à 0,9 cm³/g.

2. Poudre de dioxyde de silicium selon la revendication 1, **caractérisée en ce que** le volume des micropores déterminé par t-plot est de 0,030 à 0,10 cm³/g.

3. Isolant thermique contenant la poudre de dioxyde de silicium selon les revendications 1 ou 2.
